# FASCICULE DE BREVET EUROPEEN

(11) **EP 2 362 607 B1**
(45) Date de publication et mention de la délivrance du brevet: **27.08.2014**
(21) Numéro de dépôt: 11305117.1
(22) Date de dépôt: 07.02.2011
(51) Int. Cl.: H04L 29/08, H04L 29/06

(54) **Procédé de distribution d'un contenu vers un utilisateur**
Verfahren zum Verteilen von Inhalt an eine Gebraucher
Method for distributing content towards a user

(30) Priorité: 18.02.2010 FR 1051165
(43) Date de publication de la demande: 31.08.2011
(73) Titulaire: Orange, 75015 Paris (FR)
(72) Inventeur: Stephan, Emile, 22560 Pleumeur Bodou (FR)

(56) Documents cités:
- EP-A2- 2 093 967
- US-A1- 2008 201 361
- MEI T ET AL: "VideoSense - Towards Effective Online Video Advertising", 23 septembre 2007 (2007-09-23), PROCEEDINGS OF THE 15TH INTERNATIONAL CONFERENCE ON MULTIMEDIA, MM 2007, SEPTEMBER 23-28 2007, AUGSBURG, BAVARIA, GERMANY, ACM, AUGSBURG, GERMANY, PAGE(S) 1075 - 1084, XP002520331, ISBN: 978-1-59593-701-8 * page 1077, colonne de droite, ligne 1 - page 1079, colonne de droite, ligne 9 * * page 1080, colonne de gauche, ligne 26 - page 1081, colonne de droite, ligne 28; figures 2-4,7 *
- FASBENDER A ET AL: "ANY NETWORK, ANY TERMINAL, ANYWHERE", 1 avril 1999 (1999-04-01), IEEE PERSONAL COMMUNICATIONS, IEEE COMMUNICATIONS SOCIETY, US LNKD- DOI:10.1109/98.760420, PAGE(S) 22 - 30, XP000823965, ISSN: 1070-9916 * page 23, colonne de droite, ligne 25 - page 25, colonne de droite, ligne 11; figure 2 *

## Description

L'invention concerne une technique de préparation puis de distribution de contenus à destination d'entités clientes.

L'invention se situe dans le domaine des télécommunications et plus particulièrement dans celui de la distribution de contenus.

Des méthodes permettant d'insérer dans un premier contenu multimédia un deuxième contenu multimédia, par exemple à des fins publicitaires, existent. Une telle méthode est décrite dans le document de brevet publié sous le numéro US2008/0201361. Elle comprend une première étape d'identification d'une information contextuelle à partir d'une ou de plusieurs parties du premier contenu multimédia, une étape de sélection d'un deuxième contenu en fonction de l'information contextuelle identifiée, une étape de détermination d'une position appropriée dans le premier contenu pour insérer le deuxième contenu et une étape d'insertion du deuxième contenu à la position déterminée du premier contenu lors de la distribution du premier contenu à un terminal récepteur. Dans un mode de réalisation particulier, une information contextuelle est un mot clé, déterminé par exécution d'un programme de reconnaissance vocale sur une partie sonore du premier contenu. Puis, à partir de ce mot clé, on sélectionne le deuxième contenu. En d'autres termes, on sélectionne un deuxième contenu à insérer dans un premier contenu en fonction d'un contexte associé au premier contenu.

Toutefois, certains deuxièmes contenus ne sont pas adaptés aux conditions dans lesquelles se trouve un terminal récepteur. L'utilisateur du terminal récepteur peut se trouver par exemple en situation de mobilité et de ce fait ne manifeste pas d'intérêt lors de la réception du deuxième contenu. De plus, certains deuxièmes contenus destinés à être insérés dans un premier contenu sont susceptibles de nécessiter des moyens particuliers mis en oeuvre au niveau du terminal récepteur. A titre d'exemple, pour un deuxième contenu nécessitant une interaction avec l'utilisateur du terminal récepteur, ces moyens particuliers sont fournis par le terminal récepteur et correspondent à des moyens d'interaction avec l'utilisateur. Lorsque de tels moyens d'interaction ne sont pas disponibles, par exemple lorsqu'un écran de télévision joue le rôle du terminal récepteur, une interaction avec l'utilisateur n'est pas possible. Toujours pour ce même type de deuxième contenu, il est également possible que dans certaines circonstances, l'utilisateur du terminal récepteur se trouve dans une situation particulière lors de la distribution du deuxième contenu, dans laquelle il ne lui est pas possible d'interagir.

Le document EP2093967 décrit un procédé mis en oeuvre par un terminal pour sélectionner un contenu publicitaire à insérer lors de la diffusion d'un contenu.

Un des buts de l'invention est de remédier à des insuffisances/inconvénients de l'état de la technique et/ou d'y apporter des améliorations.

Selon un premier aspect, l'invention a pour objet un procédé de préparation d'une distribution d'un premier contenu, au cours de laquelle une insertion d'au moins un deuxième contenu est prévue à destination d'au moins une entité cliente parmi des entités clientes candidates dans un réseau de communication,
ledit procédé de préparation comprenant les étapes suivantes mises en oeuvre par un dispositif de sélection :
- une étape d'obtention d'un scénario d'insertion dans le premier contenu, ledit scénario d'insertion comprenant pour au moins une information temporelle relative au premier contenu, une proposition de deuxièmes contenus susceptibles d'être insérés dans le premier contenu ;
- une étape de sélection d'au moins une entité cliente parmi lesdites entités clientes candidates, adaptée à recevoir au moins un deuxième contenu parmi les deuxièmes contenus proposés pour ladite au moins une information temporelle, en fonction de métadonnées relatives aux sous-réseaux, dans lesquels se trouvent les entités clientes candidates.

On notera que par la suite, le terme entité cliente couvre aussi bien des terminaux, des sous-réseaux ou bien des groupes de terminaux. Les métadonnées relatives aux sous-réseaux regroupent un ensemble d'informations relatives à ces entités clientes.

Par « contenu », on entend un flux bidirectionnel échangé entre une entité cliente et une application multimédia hébergée dans le réseau. Le flux bidirectionnel peut comprendre des images, des évènements, du son, du texte, ...Il peut s'agir aussi bien de contenus multimédias distribués que de contenus interactifs, par exemple pour une application de type « jeu ».

Le procédé de préparation d'une distribution d'un premier contenu vise à sélectionner, à partir d'un scénario d'insertion défini pour une insertion de deuxièmes contenus dans le premier contenu, des entités clientes susceptibles de bénéficier d'une insertion d'un des deuxièmes contenus proposés. Plus précisément, le procédé de préparation de la distribution permet de sélectionner des entités clientes candidates à l'insertion en fonction de critères définis par les fournisseurs de deuxièmes contenus à insérer. Il est ici souligné qu'il s'agit d'entités clientes potentiellement destinataires uniquement, le deuxième contenu n'étant ensuite distribué qu'à des entités clientes requérant le premier contenu. Il s'agit ainsi d'une recommandation d'entités clientes. Les critères définis par les fournisseurs de deuxièmes contenus à insérer permettent d'élaborer le scénario d'insertion dans le premier contenu. De plus, l'utilisation de métadonnées relatives aux sous-réseaux pour sélectionner une entité cliente permet d'optimiser la distribution du deuxième contenu. A titre d'exemple illustratif, une entité cliente peut être écartée de la sélection pour un deuxième contenu requérant une interactivité lorsque les métadonnées relatives au sous-réseau indiquent qu'elle se déplace. Toujours à titre d'exemple illustratif, seules des entités clientes utilisant des terminaux adaptés vont être sélectionnées pour un deuxième contenu requérant une interactivité avec l'entité cliente.

Le procédé de préparation de la distribution tire ainsi parti des métadonnées relatives aux sous-réseaux afin de déterminer des entités clientes candidates, appelées également bénéficiaires ou destinations. De telles métadonnées sont essentiellement utilisées dans l'état de la technique pour sélectionner des sources de distribution. Ainsi, l'utilisation des métadonnées dans le procédé de préparation de la distribution permet de satisfaire les objectifs des fournisseurs de deuxièmes contenus destinés à être insérés, tels que reproduits par le scénario d'insertion du premier contenu.

Le procédé de préparation de la distribution permet d'augmenter la performance de l'insertion de deuxièmes contenus en recommandant des entités clientes disposant d'un contexte favorable. Le procédé de préparation de la distribution exploite les métadonnées relatives aux sous-réseaux afin de recommander des entités clientes et des deuxièmes contenus adaptés.

Selon une caractéristique particulière du procédé de préparation de la distribution, le procédé de préparation comprend une étape de détermination des métadonnées relatives aux sous-réseaux à partir d'au moins des informations collectées relatives aux sous-réseaux.

Ainsi, les métadonnées relatives aux sous-réseaux sont déterminées à partir des informations collectées et relatives aux différentes entités clientes, telles que les terminaux, les sous-réseaux et le réseau. Les métadonnées comprennent à la fois des données collectées et des données prédites. Les métadonnées sont ainsi régulièrement mises à jour en fonction des évolutions du réseau et permettent d'effectuer une sélection plus performante.

Plus précisément, les informations collectées relatives aux sous-réseaux appartiennent au groupe comprenant des données de configuration, des données d'exploitation, des données de qualité fournies par des applications.

Les métadonnées relatives aux sous-réseaux sont élaborées à partir de données fournies par les réseaux et par les applications, telles que des applications multimédias (Voix sur IP, Streaming, Live, radio, gaming ...)

Selon une autre caractéristique particulière du procédé de préparation de la distribution, la sélection est également effectuée en fonction de métadonnées respectivement associées au premier contenu et aux deuxièmes contenus proposés pour ladite au moins une information temporelle.

Le procédé permet ainsi de sélectionner un deuxième contenu adapté à un contexte, par exemple une situation de l'entité cliente ou des utilisateurs de cette entité cliente.

Selon une autre caractéristique particulière du procédé de préparation de la distribution, l'étape de sélection comprend une sous-étape de sélection de noeuds d'accès pour une entité cliente.

Un noeud d'accès permet de distribuer les contenus à destination des entités clientes. En fonction de l'entité cliente visée, un ou plusieurs noeuds d'accès sont susceptibles de distribuer les deuxièmes contenus. Il est ainsi préférable lors de la sélection du deuxième contenu à insérer de prendre également en compte les conditions dans lesquelles le premier contenu va être distribué. Suivant le noeud d'accès, un deuxième contenu peut être préféré à un autre.

Selon une autre caractéristique particulière du procédé de préparation de la distribution, l'étape de sélection comprend une sous-étape de sélection du deuxième contenu en fonction d'une qualité d'expérience pour l'entité cliente.

Le deuxième contenu ainsi sélectionné est adapté aux conditions dans lesquelles se trouve l'entité cliente.

Selon un deuxième aspect, l'invention concerne un procédé de distribution d'un premier contenu à destination d'entités clientes d'un réseau de communication, ledit procédé comprenant les étapes suivantes :
- une préparation de la distribution du premier contenu, telle que décrite précédemment, au cours de laquelle une insertion d'au moins un deuxième contenu est prévue à destination d'au moins une entité cliente parmi des entités clientes candidates ;
- une étape de distribution du premier contenu à destination de ladite au moins une entité cliente avec insertion du deuxième contenu.

Le procédé de préparation d'une distribution du premier contenu selon le premier aspect est ainsi avantageusement utilisé lors la distribution effective du premier contenu à destination de l'une des entités clientes. Lors de la distribution, si cette entité cliente fait partie des entités clientes recommandées, c'est-à-dire sélectionnées comme potentiellement destinataires, par la mise en oeuvre du procédé de préparation, le deuxième contenu est alors inséré lors de la distribution du premier contenu. Le fournisseur du deuxième contenu est ainsi assuré d'une distribution vers une entité cliente adaptée.

Selon une caractéristique particulière, le procédé de distribution comprend une étape de détermination d'un scénario d'insertion dans le premier contenu, ledit scénario d'insertion étant mis à jour sur réception de comptes-rendus d'insertion de deuxièmes contenus dans le premier contenu vers des entités clientes.

La distribution des deuxièmes contenus est ainsi adaptée de façon continue en fonction des distributions déjà réalisées.

Selon un troisième aspect, l'invention concerne un dispositif de sélection, agencé pour préparer une distribution d'un premier contenu, au cours de laquelle une insertion d'au moins un deuxième contenu est prévue à destination d'au moins une entité cliente parmi des entités clientes candidates dans un réseau de communication, comprenant :
- des moyens d'obtention d'un scénario d'insertion dans le premier contenu, ledit scénario d'insertion comprenant pour au moins une information temporelle relative au premier contenu, une proposition de deuxièmes contenus susceptibles d'être insérés dans le premier contenu ;
- des moyens de sélection d'au moins une entité cliente, agencés pour sélectionner au moins une entité cliente parmi lesdites entités clientes candidates, adaptée à recevoir au moins un deuxième contenu parmi les deuxièmes contenus proposés pour ladite au moins une information temporelle, en fonction de métadonnées relatives aux sous-réseaux, dans lesquels se trouvent les entités clientes candidates.

Selon un quatrième aspect, l'invention concerne un système agencé pour préparer une distribution d'un premier contenu, au cours de laquelle une insertion d'au moins un deuxième contenu est prévue à destination d'au moins une entité cliente parmi des entités clientes candidates dans un réseau de communication, comprenant :
- des moyens de détermination d'un scénario d'insertion dans le premier contenu, ledit scénario d'insertion comprenant pour au moins une information temporelle relative au premier contenu, une proposition de deuxièmes contenus susceptibles d'être insérés dans le premier contenu ;
- des moyens de sélection d'au moins une entité cliente, agencés pour sélectionner au moins une entité cliente parmi lesdites entités clientes candidates, adaptée à recevoir au moins un deuxième contenu parmi les deuxièmes contenus proposés pour ladite au moins une information temporelle, en fonction de métadonnées relatives aux sous-réseaux, dans lesquels se trouvent les entités clientes candidates.

Selon un cinquième aspect, l'invention concerne un système de distribution de contenus d'un premier contenu à destination d'entités clientes d'un réseau de communication, comprenant :
- un système tel que décrit précédemment, agencé pour préparer une distribution d'un premier contenu, au cours de laquelle une insertion d'au moins un deuxième contenu est prévue à destination d'au moins une entité cliente parmi des entités clientes candidates dans un réseau de communication ;
- des moyens de distribution du premier contenu à destination de ladite au moins une entité cliente avec insertion du deuxième contenu..

Selon un sixième aspect, l'invention concerne également un programme d'ordinateur comportant des instructions pour la mise en oeuvre du procédé de préparation tel que décrit précédemment, mises en oeuvre par un dispositif de sélection, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente un système de distribution de contenus dans son environnement selon un mode particulier de réalisation de l'invention ;
- les figures 2a et 2b représentent un schéma simplifié des étapes du procédé de préparation de la distribution et de celles du procédé de distribution selon un mode particulier de réalisation de l'invention ;
- la figure 3 représente un dispositif de sélection selon un mode particulier de réalisation de l'invention.

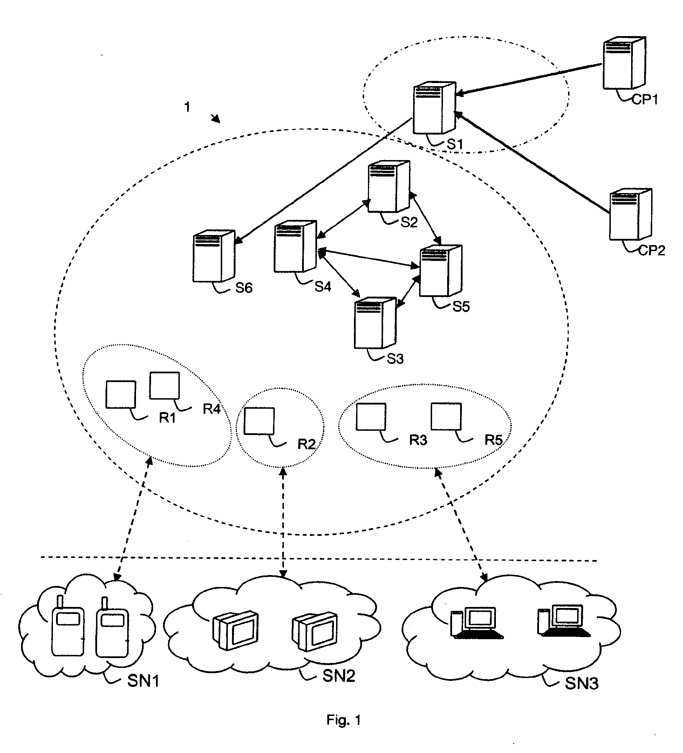

Un système 1 de distribution de contenus dans son environnement va être décrit en relation avec la figure 1 selon un mode particulier de réalisation.

Le système 1 de distribution de contenus comprend un serveur S6 de livraison de contenus, une régie multimédia S1, un serveur S2 mettant en oeuvre une application d'insertion de deuxièmes contenus dans des premiers contenus distribués ou serveur applicatif, un serveur S5 proposant un service de recherche sémantique, un serveur S3 de sélection de contexte et un serveur S4 d'adaptation de contexte. Les rôles respectifs des différents serveurs sont détaillés de manière plus précise ultérieurement en relation avec la description des procédés de préparation de la distribution et de distribution dans un mode particulier de réalisation.

Le serveur S6 de livraison de contenus est agencé pour distribuer des contenus à destination d'une pluralité d'utilisateurs appartenant à des sous-réseaux logiques SN1, SN2, SN3. Un sous-réseau logique SN1-SN3 regroupe un ensemble de terminaux homogènes et est administré par un fournisseur d'accès. Le premier sous-réseau logique SN1 propose un accès sans fil à un ensemble de terminaux mobiles. Le deuxième sous-réseau logique SN2 propose un accès à un ensemble de téléviseurs. Le troisième sous-réseau logique SN3 propose un accès de type Internet à un ensemble d'ordinateurs. Aucune limitation n'est attachée à la présente invention par rapport à ces différents accès.

Des noeuds d'accès au sous-réseau R1-R5 sont en charge d'acheminer les contenus jusqu'aux terminaux des sous-réseaux SN1-SN3. Ils sont appelés par la suite noeuds de livraison. Plus précisément, les noeuds de livraison R1, R4 acheminent des contenus jusqu'au sous-réseau SN1, les noeuds de livraison R3, R5 jusqu'au sous-réseau SN3 et le noeud de livraison R2 jusqu'au sous-réseau SN2.

On considère par la suite que les contenus sont divisés en blocs élémentaires. Un numéro de bloc élémentaire permet d'identifier un bloc donné du contenu. On peut choisir une taille de bloc élémentaire de dix Mégaoctets pour un contenu multimédia, ce qui correspond par exemple à une minute de film AVI/Divx de bonne définition. Chaque bloc élémentaire est composé de quatre parties : taille, type de bloc, données, code correcteur d'erreur. Le format RIFF pour « Resource Interchange File Format » est un méta-format générique pour mémoriser des données dans des blocs élémentaires étiquetés.

Les contenus à distribuer sont proposés par des fournisseurs de contenus CP1, CP2. Le premier fournisseur de contenu CP1 propose une pluralité de contenus d'un premier type, dont des premiers contenus C1, C2 et destinés à être distribués à des utilisateurs des terminaux des sous-réseaux logiques SN1, SN2, SN3. Les contenus peuvent être de différents genres. Il peut s'agir de contenus diffusés en temps réel, de contenus multimédias susceptibles d'être obtenus à la demande, de contenus multimédias susceptibles d'être diffusés en mode de lecture en continu ou "streaming" en anglais, de contenus d'actualités au format RSS, de livres multimédias... Par la suite, le contenu C1 est un film diffusé en temps réel, le contenu C2 correspond au contenu C1 mais est diffusé à la demande.

Le deuxième fournisseur de contenu CP2 propose une pluralité de deuxièmes contenus P1-P6 d'un deuxième type et destinés à être insérés dans des contenus C1-C2 du premier type. Il s'agit de contenus de courte durée, par exemple des contenus publicitaires, sous forme de texte, d'image, de vidéo et de son.

Aux différents contenus de premier et deuxième types, sont associées des métadonnées. Les métadonnées d'un contenu de premier type C1, C2 peuvent comprendre :
- une table des matières ;
- une association d'annotations émises par des utilisateurs à des groupes de blocs élémentaires ;
- une association de mots clés à des groupes de blocs élémentaires.

Les métadonnées d'un contenu de deuxième type P1-P6 peuvent comprendre :
- des caractéristiques techniques : interactivité ou non, taille, type (audio, vidéo, image, photo, texte, audio-vidéo, avt, ...) ;
- un nombre d'insertions à effectuer ;
- un nombre de résultats attendus par heure ;
- un type du contenu : par exemple film d'action, noté « action », humour, noté « drôle », ... ;
- un type de contenu dans lequel l'insertion doit avoir lieu, recherché ou à éviter (+action, +drôle, -guerre, ...) ;
- un type d'utilisateur recherché ou à éviter (âge, profil...) ;
- une information représentative d'une situation recherchée ou a éviter (repas, famille, loisir, maison, voiture, gare, train, déplacement ...) ;
- une indication horaire ;
- un niveau de qualité d'expérience, ou MOS, minimum des contextes recherchés ;
- une localisation recherchée (région, ville, quartier, magasin...).

On notera d'emblée que cette liste de métadonnées n'est pas exhaustive et peut être complétée et/ou modifiée en fonction de demandes spécifiques du fournisseur de contenus CP2.

Ces métadonnées associées au contenu de deuxième type P1-P6 sont susceptibles d'évoluer au fur et à mesure d'insertions effectives de ce contenu dans des contenus distribués.

Par la suite, on se place dans le cas particulier où les deuxièmes contenus P2, P3, P4, P5, P6 sont des contenus multimédias interactifs et le contenu P1 est un contenu multimédia non interactif.

Le procédé de préparation de la distribution comprend plusieurs phases :
- une phase d'élaboration de métadonnées relatives aux sous-réseaux et aux éléments qui les composent ;
- une phase de construction d'un scénario d'insertion associé à un premier contenu ;
- une phase de préparation de la distribution du premier contenu comprenant une élaboration d'une programmation d'insertion opérationnelle.

Le procédé de préparation de la distribution s'intègre ainsi dans un procédé de distribution comprenant une phase de distribution du premier contenu en fonction de la programmation d'insertion opérationnelle.

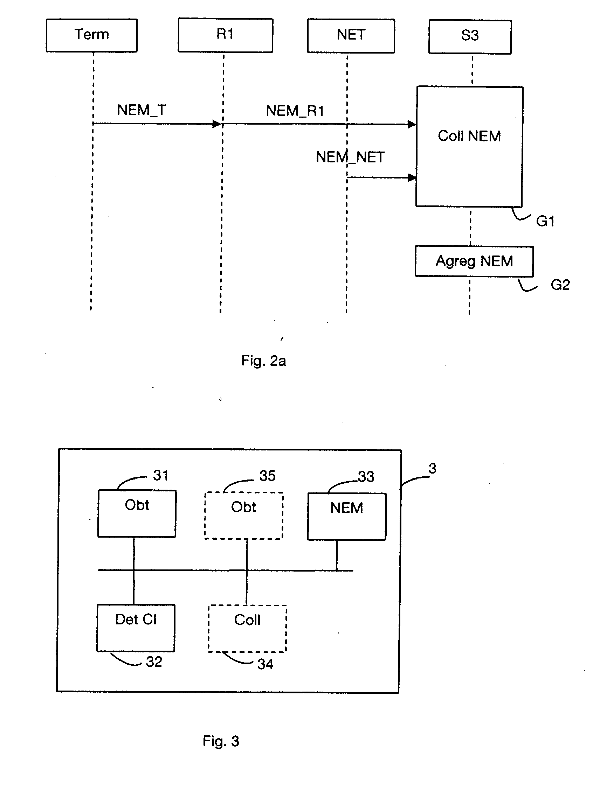

La phase d'élaboration de métadonnées relatives aux sous-réseaux va maintenant être décrite en relation avec la figure 2a.

Le serveur S3 de sélection de contexte est en charge d'élaborer les métadonnées relatives aux sous-réseaux. Ces métadonnées décrivent un ou plusieurs éléments du plan d'adressage. Il peut s'agir d'un terminal, d'un élément d'infrastructure, d'un sous-réseau, d'un réseau. Dans un réseau de type Internet, il est par exemple possible d'identifier un tel élément à l'aide d'un préfixe et d'un masque, noté sous la forme « / ». En fonction du nombre de bits masqués, il est possible d'identifier ainsi un équipement particulier ou un sous-réseau. Les données constituant les métadonnées sont alors organisées en fonction des préfixes réseau auxquelles elles se rapportent. Aucune limitation n'est attachée à ce mode d'organisation des données par préfixe. Il est ici souligné que d'autres modes d'organisation des données sont également possibles, notamment en se basant sur d'autres types d'adressage (par exemple, pour les réseaux mobiles, un adressage par zone de localisation ou bien par cellules) ou de nommage (par exemple, numérotation téléphonique, nom de domaine, URL, ...). Les données constituant les métadonnées comprennent une description, un profil et un contexte. La description contient des données statistiques donnant des détails sur l'élément. Le contexte décrit la situation actuelle de l'élément et son activité. Le profil contient une consolidation temporelle du contexte.

Le serveur S3 de sélection de contexte reçoit dans une étape G1 du procédé de préparation en provenance de l'un des noeuds d'accès R1-R5 des métadonnées NEM_Ri comprenant également des métadonnées NEM_T élaborées par les terminaux connectés au réseau par l'intermédiaire de ce noeud d'accès.

Les métadonnées NEM_Ri comprennent des informations relatives au sous-réseau telles que des données d'exploitation, des données de qualité fournies par des applications. Il s'agit par exemple des informations suivantes :
- une mesure de la qualité d'expérience sur des blocs élémentaires des contenus de premier et de deuxième types ;
- une information relative à une vitesse ;
- une information de géo-localisation ;
- une information relative à un taux de charge du noeud d'accès.

Toujours dans cette étape G1, le serveur S3 de sélection de contexte reçoit des métadonnées en provenance du réseau.

Les métadonnées NEM_NET comprennent des données de configuration, des données opérationnelles. Il s'agit par exemple des informations suivantes :
- un plan d'adressage dans le réseau ;
- des informations relatives au routage.

Dans une étape G2 de détermination des métadonnées relatives au sous-réseau du procédé de préparation, le serveur S3 de sélection de contexte déduit des métadonnées relatives au sous-réseau ou métadonnées consolidées à partir de l'ensemble de ces métadonnées NEM_Ri (comprenant les NEM_T) et NEM_NET. Ces métadonnées relatives au sous-réseau NEM comprennent également :
- des données prédites à partir d'observations passées, par exemple une prédiction de trafic, une prédiction d'une localisation ;
- des données de contexte, déduites du profil de l'entité cliente et du réseau d'accès ou des autres métadonnées.

Le procédé de préparation repasse ensuite à l'étape G1 en attente de réception de métadonnées. Ainsi, les étapes G1 et G2 sont exécutées en tâche de fond et mettent à jour les métadonnées relatives aux sous-réseaux de façon continue.

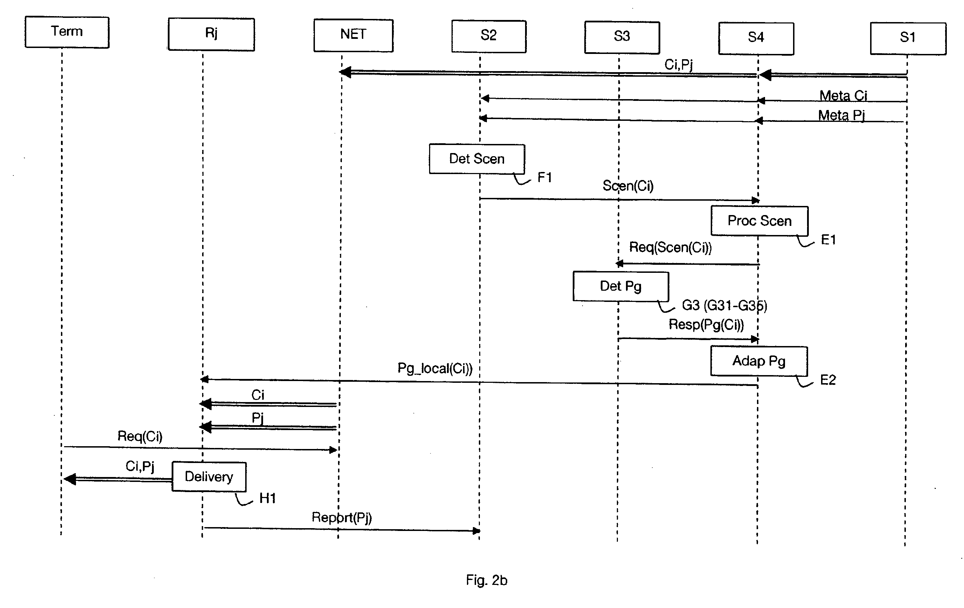

Les trois autres phases du procédé de préparation vont maintenant être décrites en relation avec la figure 2b.

La régie multimédia S1 distribue dans une phase initiale les contenus C1, C2 de premier et P1-P6 de deuxième types vers le serveur S4 d'adaptation de contexte et dans l'infrastructure de stockage dans le réseau, notamment le serveur S6 de livraison de contenus ou plusieurs serveurs de ce type. Toujours dans cette phase initiale, la régie multimédia S1 élabore des métadonnées des contenus P1-P6 de deuxième type en fonction des demandes du deuxième fournisseur de contenu CP2. La régie multimédia S1 transmet ensuite les métadonnées respectivement associées aux différents contenus vers le serveur S2 mettant en oeuvre l'application d'insertion de contenus de deuxième type dans des contenus de premier type. Par la suite, on utilise indifféremment les termes « contenus de premier type » et « premiers contenus ». Il en est de même pour les termes « contenus de deuxième type » et « deuxièmes contenus ».

Dans une étape F1 du procédé de préparation, le serveur applicatif S2 détermine pour un contenu de premier type, tel que le contenu C1, C2, un scénario d'insertion.

Par la suite, on appelle scénario d'insertion dans un premier contenu un ensemble comprenant pour une information temporelle relative au premier contenu, une proposition de deuxièmes contenus susceptibles d'être insérés dans le premier contenu.

Le serveur applicatif S2 détermine notamment un type de contenu pour chaque bloc élémentaire du premier contenu C1, C2 à partir d'une analyse automatique du contenu, des métadonnées décrivant le contenu, telles que la table des matières, des commentaires des utilisateurs,...

Puis pour chaque bloc élémentaire du premier contenu, le serveur applicatif S2 détermine une proposition de deuxièmes contenus P1-P6 à insérer s'il en existe. Plus précisément, pour un bloc élémentaire, le serveur S2 détermine les deuxièmes contenus à insérer à partir :
- des distances sémantiques entre le contenu du bloc élémentaire et les contenus de deuxième type, ces distances sémantiques étant fournies par le serveur S5 de recherche sémantique ;
- d'une densité de blocs ayant un même type de contenu ;
- de la planification de distribution du premier contenu (heure...) ;
- des métadonnées associées aux deuxièmes contenus.

A titre d'exemple illustratif, on se place dans le cas où le scénario d'insertion associé au contenu C1 de premier type, qui correspond à un film diffusé en temps réel, est:
start { 10 mai à 13h}
insertion {(Ck4:Ck24, P3), (Ck26, P2), (Ck44, P1, P5), (Ck57:Ck73, P6), (Ck84, P4)} client { any }

Ce scénario est valide à partir du 10 mai à 13h et pour l'ensemble des utilisateurs.

Pour un premier intervalle de temps défini par les blocs élémentaires Ck4 à Ck24, le deuxième contenu susceptible d'être inséré est P3. Pour un deuxième intervalle de temps défini par le bloc élémentaire Ck26, le deuxième contenu susceptible d'être inséré est P2. Pour un troisième intervalle de temps défini par le bloc élémentaire Ck44, les deuxièmes contenus susceptibles d'être insérés sont P1 et P5. Pour un quatrième intervalle de temps défini par les blocs élémentaires Ck57 à Ck73, le deuxième contenu susceptible d'être inséré est P6. Pour un cinquième intervalle de temps défini par le bloc élémentaire Ck84, le deuxième contenu susceptible d'être inséré est P4.

Toujours à titre d'exemple, pour le contenu C2 de premier type, proposant le même contenu que C1 mais en différé, le scénario d'insertion associé au contenu C2 est le suivant :
start { 10 mai à 15h }
insertion {(Ck4:Ck24, P3), (Ck26, P2), (Ck44, P1, P5), (Ck57:Ck73, P6), (Ck84, P4)} client { any }

S'il s'agit d'un premier contenu dont les données ne sont pas déjà connues ou contenu non pré-produit, le scénario d'insertion associé est construit partiellement à partir des métadonnées associées au premier contenu. Dans ce cas, les blocs élémentaires n'étant pas connus, le serveur S2 détermine le scénario d'insertion en associant à un évènement donné des deuxièmes contenus à partir de la planification de distribution du premier contenu (heure...), des métadonnées associées aux deuxièmes contenus.

A l'issue de cette étape F1, c'est-à-dire une fois le scénario d'insertion associé à un contenu du premier type déterminé, le serveur S2 applicatif transmet au serveur S4 d'adaptation le scénario d'insertion déterminé.

Le scénario d'insertion est reçu par le serveur S4 d'adaptation dans une étape E1 du procédé de préparation. Le serveur S4 d'adaptation complète le scénario d'insertion en fonction d'informations relatives à la distribution du premier contenu C1, C2. Plus précisément, le serveur S4 d'adaptation obtient une liste des contenus en cours de distribution, des serveurs disposant des contenus (contenu mémorisé, contenu en cours de distribution, contenu pour lequel une distribution est programmée,...) et des préfixes des clients concernés, le cas échéant. Lorsque le premier contenu C1, C2 est déjà présent au niveau de certains noeuds d'accès R1-R5, le serveur S4 ajoute une liste de serveurs « servers {} » comprenant ces noeuds d'accès dans le scénario d'insertion.

Puis, le serveur S4 d'adaptation transmet le scénario d'insertion complété au serveur S3 de sélection de contexte en lui demandant une sélection parmi les différentes propositions. Il s'agit notamment de sélectionner des entités clientes candidates à l'insertion et des deuxièmes contenus adaptés à ces entités clientes sélectionnées.

Le serveur S3 de sélection de contexte obtient le scénario d'insertion complété dans une étape G3 du procédé de préparation. Plus précisément dans ce mode particulier de réalisation, le serveur S3 de sélection le reçoit et sélectionne des entités clientes candidates et au moins un deuxième contenu associé pour au moins l'une des informations temporelles du scénario d'insertion, à partir de la proposition de deuxièmes contenus et en fonction de métadonnées relatives aux sous-réseaux. Le serveur S3 de sélection sélectionne ainsi au moins une entité cliente parmi lesdites entités clientes candidates, adaptée à recevoir au moins un deuxième contenu parmi les deuxièmes contenus proposés pour ladite au moins une information temporelle, en fonction de métadonnées relatives aux sous-réseaux, dans lesquels se trouvent les entités clientes candidates.

L'utilisation des métadonnées relatives aux sous-réseaux permet de sélectionner avec pertinence des entités clientes candidates et le ou les deuxièmes contenus associés.

Dans une première sous-étape G31, le serveur S3 de sélection sélectionne au moins une entité cliente candidate. Plus précisément, le serveur S3 de sélection détermine une liste d'au moins une entité cliente candidate en fonction de métadonnées respectivement associées au premier contenu C1 et aux deuxièmes contenus proposés P1-P6 pour chacune des informations temporelles du scénario d'insertion.

Lorsque la liste des entités clientes transmise par le serveur S4 d'adaptation est vide, le serveur S3 de sélection détermine des entités clientes identifiées par des préfixes candidats à partir de données de localisation comprises dans les métadonnées relatives aux sous-réseaux et de la zone géographique de distribution du premier contenu, et complète la liste des entités clientes. Il est ici rappelé que l'entité cliente sélectionnée peut également être un sous-réseau.

En outre, le serveur S3 de sélection détermine dans la liste des entités clientes « clients », éventuellement fournie par le serveur S4 ou établie précédemment, des entités clientes candidates identifiées par des préfixes à partir des métadonnées de géo-localisation du deuxième contenu. Seules les entités clientes présentes dans une région cible d'insertion du deuxième contenu sont conservées.

Puis dans une deuxième sous-étape G32, le serveur S3 de sélection sélectionne des noeuds de livraison en fonction d'un critère de proximité et d'un critère de charge. Le critère de proximité correspond à une évaluation d'une performance des chemins entre les noeuds de livraison disponibles et une entité cliente, à partir des données de routage comprises dans les métadonnées relatives aux sous-réseaux. Le critère de charge est évalué à partir des informations relatives à un taux de charge comprises également dans les métadonnées relatives aux sous-réseaux, pour l'ensemble des éléments composant un chemin. Il est ici souligné que ces éléments comprennent le noeud de livraison.

Plus précisément, pour une entité cliente candidate de la liste, le serveur S3 de sélection sélectionne des noeuds d'accès R1-R5 pour la distribution des contenus, ces noeuds d'accès ayant un taux de charge et une proximité adaptés, et insère une liste de noeuds d'accès dans la liste « servers ».

Dans une troisième sous-étape G33, le serveur S3 de sélection sélectionne pour une entité cliente candidate un deuxième contenu parmi les deuxièmes contenus proposés pour chacune des informations temporelles, en fonction de métadonnées relatives au sous-réseau, auquel appartient l'entité cliente candidate. Plus précisément, le serveur S3 de sélection met en oeuvre un filtrage des deuxièmes contenus associés aux entités clientes et écarte des entités clientes dont la typologie est trop éloignée de celles recherchées pour les deuxièmes contenus, telles qu'identifiées dans le scénario d'insertion.

Le serveur S3 de sélection sélectionne un deuxième contenu pour lequel le modèle de données est le plus proche de celui des métadonnées relatives au sous-réseau auquel appartient l'entité cliente candidate.

Le serveur S3 de sélection sélectionne un deuxième contenu adapté en fonction des capacités des entités clientes. Un deuxième contenu interactif n'est par exemple pas sélectionné pour une entité cliente ne présentant pas de moyens d'interaction. De même, un deuxième contenu interactif n'est pas sélectionné pour des entités clientes en situation de mobilité.

Par ailleurs, le serveur S3 de sélection exploite les prédictions de géo-localisation des entités clientes pour :
- écarter des deuxièmes contenus dont l'insertion est requise à des moments inadaptés (par exemple, une géo-localisation égale à « gare » et un type de situation pour l'insertion égale à « repas »)
- sélectionner des endroits recommandés pour le deuxième contenu (quartier, carrefour, magasin...).

Le serveur S3 de sélection écarte une entité cliente lorsque le modèle de données des métadonnées du deuxième contenu est très différent de celui des métadonnées relatives au sous-réseau, auquel appartient l'entité cliente candidate.

Ces sélection et mise à l'écart sont par exemple réalisées à partir de tables de distances sémantiques.

A titre d'exemple non limitatif d'un usage de tables de distances sémantiques, il est recommandé d'insérer un certain deuxième contenu pour une situation de l'entité cliente la plus proche possible d'un « repas » alors que les métadonnées relatives aux sous-réseaux donnent des informations telles que « gare » ou « voiture ». A l'aide d'un moteur de recherche tel que celui proposé par Google, on peut déterminer qu'une recherche du mot clé « gare » donne 240 millions d'instances alors qu'une recherche simultanée des mots clés « repas » et « gare » donne trois millions d'instances soit un rapport de huit. De même, une recherche du mot clé « voiture » donne 40 millions d'instances alors qu'une recherche simultanée des mots clés « repas » et « voiture » associés donne 8 millions d'instances soit un rapport de cinq. La situation « repas » recherchée est donc plus proche de la situation « gare » que de la situation « voiture ».

Ainsi, il est possible de comparer entre eux des informations de types différents sans réaliser de conversion d'un type vers l'autre.

Les tables de distance sémantiques s'appliquent aux noms des champs et aux valeurs des champs de métadonnées hétérogènes. Elles sont calculées au préalable et régulièrement mises à jour.

La distance sémantique entre mots clés est ainsi déterminée à partir d'un nombre d'occurrences simultanées des mots clés dans un ensemble d'informations très grand.

Dans une quatrième sous-étape G34, le serveur S3 de sélection écarte des entités clientes et des serveurs identifiés par des préfixes dont les indicateurs de qualité ne sont pas au niveau requis, à partir des contextes et des prédictions des préfixes.

Dans une cinquième sous-étape G35, le serveur S3 de sélection met en oeuvre un filtrage des deuxièmes contenus en fonction des ressources disponibles.

Plus précisément, le serveur S3 de sélection sélectionne des entités clientes identifiées par des préfixes en fonction de données d'exploitation du réseau, telles qu'une maintenance du réseau, d'une heure de pointe de trafic.

Le serveur S3 sélectionne des deuxièmes contenus adaptés aux indicateurs de qualité d'expérience des entités clientes. Par exemple, la sélection est effectuée à partir d'un indicateur de qualité d'expérience MOS mesuré pour un sous-réseau logique :
- pas d'insertion pour un sous-réseau présentant une qualité d'expérience très faible, par exemple MOS égal à un ;
- un deuxième contenu de type « texte » pour un sous-réseau présentant une qualité d'expérience très mauvaise, par exemple MOS égal à deux ;
- un deuxième contenu de type « image » pour un sous-réseau présentant une qualité d'expérience mauvaise, par exemple MOS égal à trois ;
- un deuxième contenu de type « contenu simple définition et interactif » pour un sous-réseau présentant une qualité d'expérience bonne , par exemple MOS égal à quatre ;
- un deuxième contenu de type « contenu haute définition et interactif » pour un sous-réseau présentant une qualité d'expérience très bonne, par exemple MOS égal à cinq.

Cette sélection présente différents intérêts. En effet, en se basant sur les indicateurs de qualité, cette sélection évite de distribuer un deuxième contenu très élaboré à des sous-réseaux dont les ressources disponibles ne permettent pas une réception dans de bonnes conditions. De plus, la distribution surcharge un réseau, qui l'est sûrement déjà.

Ces différentes sous-étapes G31-G35 de l'étape G3 de sélection du procédé de préparation permettent ainsi une sélection efficace conciliant les intérêts de l'opérateur du réseau et ceux du fournisseur des deuxièmes contenus destinés à être insérés.

Le serveur S3 de sélection élabore ainsi une programmation d'insertion pour le premier contenu et la transmet ensuite au serveur S4 d'adaptation.

Par exemple, pour le contenu C1, la programmation d'insertion élaborée est la suivante :

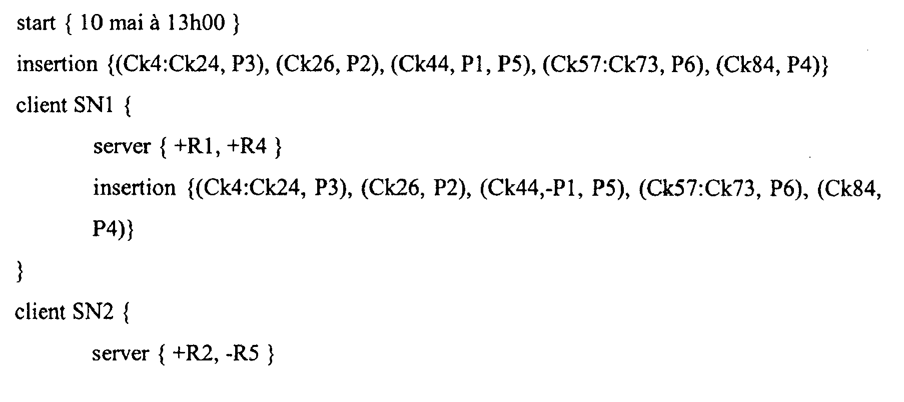

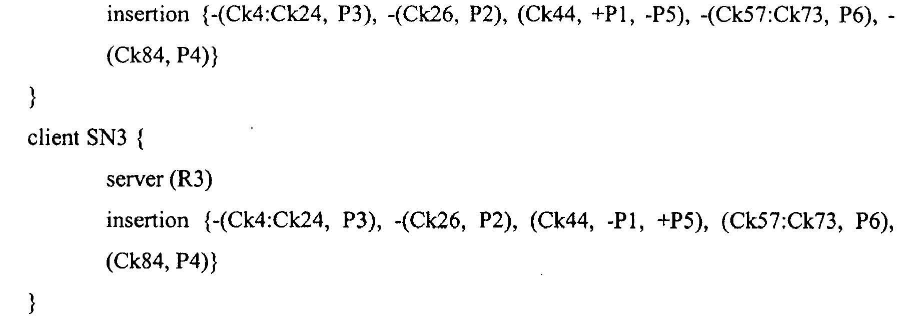

Par convention, un signe « moins » signifie que le serveur S3 de sélection de contexte a supprimé l'élément et un signe « plus » signifie que le serveur S3 de sélection de contexte a maintenu l'élément.

La distribution vers le sous-réseau logique SN2 ne comporte que le deuxième contenu P1 car les terminaux de SN2 ne sont pas interactifs.

La distribution vers le sous-réseau logique SN3 ne comporte pas les deuxièmes contenus P2 et P3 car le noeud d'accès R3 est limité en capacité et a habituellement un pic de charge ver 13h.

Le serveur S4 d'adaptation reçoit la programmation d'insertion dans une étape E2 du procédé de préparation et adapte cette programmation en fonction des choix restants, le cas échéant, pour obtenir une programmation d'insertion opérationnelle.

Par exemple, pour le contenu C1, le serveur S4 d'adaptation effectue le choix entre les noeuds d'accès R1 et R4 pour le sous-réseau logique SN1.

Puis, le serveur S4 d'adaptation diffuse la programmation d'insertion opérationnelle déterminée par la mise en oeuvre des étapes du procédé de préparation aux noeud d'accès R1-R5.

Le serveur S4 d'adaptation prépare la distribution des contenus de premier type en les ajoutant aux catalogues électroniques et en les positionnant sur les noeuds d'accès Ri retenus. De même, il positionne les contenus de deuxième type dans les noeuds d'accès retenus.

Lorsqu'une entité cliente de l'un des sous-réseaux logiques SN1-SN3 demande une distribution d'un contenu de premier type C1, C2, par exemple par sélection dans un catalogue électronique, dans une étape H1 du procédé de distribution, le noeud d'accès R1-R5 détermine à partir de la programmation d'insertion opérationnelle reçue si cette entité cliente fait partie des entités clientes candidates. Si tel est le cas, le noeud d'accès R1-R5 distribue le contenu de premier type requis et insère les deuxièmes contenus P1-P6 en fonction de la programmation d'insertion opérationnelle reçue.

Le noeud d'accès R1-R5 transmet au serveur applicatif S2 des comptes-rendus d'insertion des différents deuxièmes contenus. Ces comptes-rendus d'insertion sont éventuellement transmis par l'intermédiaire du serveur S3 de sélection ou du serveur S4 d'adaptation ou ces deux serveurs.

Lorsque le serveur applicatif S2 reçoit les comptes-rendus d'insertion, il met de nouveau en oeuvre l'étape F1, afin de mettre à jour le scénario d'insertion associé au premier contenu, et communique le scénario d'insertion mis à jour au fil de l'eau au serveur S4 d'adaptation.

Le serveur S4 d'adaptation met de nouveau en oeuvre les étapes E1 et E2 et le serveur S3 de sélection met de nouveau en oeuvre l'étape G3, afin d'adapter la programmation d'insertion opérationnelle.

Le scénario d'insertion et la programmation d'insertion opérationnelle pour un premier contenu évoluent ainsi au fur et à mesure de la distribution de ce premier contenu vers des entités clientes candidates grâce :
- aux comptes-rendus d'insertion des deuxièmes contenus dans le premier contenu ;
- à une mise à jour régulière des métadonnées relatives aux sous-réseaux, telles qu'effectuées par les étapes G1 et G2 du procédé de préparation ; et,
- le cas échéant, à une mise à jour des métadonnées associées aux deuxièmes contenus.

Le mode de réalisation particulier tel que décrit propose une pluralité de serveurs mettant en oeuvre les différentes étapes du procédé de préparation. D'autres modes de réalisation particuliers sont envisageables, notamment en regroupant des fonctions sur un ou plusieurs serveurs. Il est ainsi possible que les étapes G1 à G3 et E1 à E2 soient mises en oeuvre par un seul serveur.

Un dispositif de sélection dans un mode particulier de réalisation va maintenant être décrit en relation avec la figure 3. Un tel dispositif est agencé pour préparer une distribution d'un premier contenu, au cours de laquelle une insertion d'au moins un deuxième contenu est prévue à destination d'au moins une entité cliente parmi des entités clientes candidates dans un réseau de communication.

Un tel dispositif 3 comprend :
- un module 31 d'obtention d'un scénario d'insertion dans le premier contenu, ledit scénario d'insertion comprenant pour au moins une information temporelle relative au premier contenu, une proposition de deuxièmes contenus susceptibles d'être insérés dans le premier contenu ;
- un module 32 de sélection d'au moins une entité cliente, agencé pour sélectionner au moins une entité cliente parmi lesdites entités clientes candidates, adaptée à recevoir au moins un deuxième contenu parmi les deuxièmes contenus proposés pour ladite au moins une information temporelle, en fonction de métadonnées relatives aux sous-réseaux, dans lesquels se trouvent les entités clientes candidates ;
- des moyens 33 de mémorisation de métadonnées relatives aux sous-réseaux.

Le dispositif de sélection 3 peut être intégré dans un serveur S3 de sélection tel que décrit précédemment. Dans ce mode de réalisation particulier, le module 31 d'obtention est agencé pour recevoir du serveur S4 d'adaptation le scénario d'insertion.

Le dispositif de sélection 3 peut être également intégré dans un serveur jouant les rôles des serveurs S3 de sélection et S4 d'adaptation. Dans un tel mode de réalisation, le module 31 d'obtention est agencé pour recevoir le scénario d'insertion du serveur S2 applicatif.

Le dispositif de sélection peut être également intégré dans un serveur jouant les rôles des serveurs S2 applicatif, S3 de sélection et S4 d'adaptation. Dans un tel mode de réalisation, le module 31 d'obtention est agencé pour déterminer le scénario d'insertion tel que décrit précédemment en relation avec l'étape F1 du procédé de préparation.

Le module 32 de sélection d'au moins une entité cliente est agencé pour obtenir les métadonnées relatives aux sous-réseaux à partir des moyens 33 de mémorisation. Le module 32 de sélection est agencé pour mettre en oeuvre l'étape G3 du procédé de préparation.

Dans un mode particulier de réalisation, le dispositif de sélection 3 comprend également un module 34 de collecte d'informations relatives aux sous-réseaux et un module 35 de détermination des métadonnées relatives aux sous-réseaux à partir des informations collectées.

Les modules 31, 32, 34, 35 du dispositif 3 de sélection sont agencés pour mettre en oeuvre celles des étapes du procédé de préparation d'une distribution précédemment décrit exécutées par le dispositif de sélection. Il s'agit de préférence de modules logiciels comprenant des instructions logicielles pour faire exécuter celles des étapes du procédé de préparation d'une distribution précédemment décrit, mises en oeuvre par un dispositif de sélection. L'invention concerne donc aussi :
- un programme pour dispositif de sélection, comprenant des instructions de programme destinées à commander l'exécution de celles des étapes du procédé de préparation précédemment décrit qui sont exécutées par ledit dispositif, lorsque ledit programme est exécuté par un processeur de celui-ci ;
- un support d'enregistrement lisible par un dispositif de sélection sur lequel est enregistré le programme pour dispositif de sélection.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 1 de distribution de contenus d'un premier contenu à destination d'entités clientes d'un réseau de communication, comprenant :
- un système, tel que décrit précédemment, agencé pour préparer une distribution d'un premier contenu, au cours de laquelle une insertion d'au moins un deuxième contenu est prévue à destination d'au moins une entité cliente parmi des entités clientes candidates dans un réseau de communication ;
- un module de distribution du premier contenu à destination de ladite au moins une entité cliente avec insertion du deuxième contenu.

## Revendications

1. Procédé de préparation d'une distribution d'un premier contenu (Ci), au cours de laquelle une insertion d'au moins un deuxième contenu (Pj) est prévue à destination d'au moins une entité cliente parmi des entités clientes candidates dans un réseau de communication (1),
ledit procédé de préparation comprenant les étapes suivantes mises en oeuvre par un dispositif de sélection (3, S2, S3, S4) :
- une étape d'obtention d'un scénario d'insertion dans le premier contenu (Ci), ledit scénario d'insertion comprenant une proposition de deuxièmes contenus (Pj) susceptibles d'être insérés dans le premier contenu (Ci);
**caractérisé en ce que** les deuxièmes contenus (Pi) sont proposés pour au moins une information temporelle relative au premier contenu (Ci) et **en ce que** le procédé comprend en outre :
- une étape (G3) de sélection d'au moins une entité cliente parmi lesdites entités clientes candidates, adaptée à recevoir au moins un deuxième contenu (Pj) parmi les deuxièmes contenus (Pj) proposés pour ladite au moins une information temporelle, en fonction de métadonnées relatives aux sous-réseaux (SN1, SN2, SN3), dans lesquels se trouvent les entités clientes candidates.

2. Procédé de préparation de la distribution selon la revendication 1, comprenant en outre une étape (G3) de détermination des métadonnées relatives aux sous-réseaux (SN1, SN2, SN3) à partir d'au moins des informations collectées (G2) relatives aux sous-réseaux (SN1, SN2, SN3).

3. Procédé de préparation de la distribution selon la revendication 2, dans lequel les informations collectées relatives aux sous-réseaux (SN1, SN2, SN3) appartiennent au groupe comprenant des données de configuration, des données d'exploitation, des données de qualité fournies par des applications.

4. Procédé de préparation de la distribution selon la revendication 1, dans lequel la sélection (G31) est également effectuée en fonction de métadonnées respectivement associées au premier contenu (Ci) et aux deuxièmes contenus (Pj) proposés pour ladite au moins une information temporelle.

5. Procédé de préparation de la distribution selon la revendication 1, dans lequel l'étape de sélection comprend une sous-étape (G32) de sélection de noeuds d'accès pour une entité cliente.

6. Procédé de préparation de la distribution selon la revendication 1, dans lequel l'étape de sélection comprend une sous-étape (G35) de sélection du deuxième contenu (Pj) en fonction d'une qualité d'expérience pour l'entité cliente.

7. Procédé de distribution d'un premier contenu (Ci) à destination d'entités clientes d'un réseau de communication, ledit procédé comprenant les étapes suivantes :
- une préparation de la distribution du premier contenu (Ci), au cours de laquelle une insertion d'au moins un deuxième contenu (Pj) est prévue à destination d'au moins une entité cliente parmi des entités clientes candidates, selon la revendication 1 ;
- une étape (H1) de distribution du premier contenu à destination de ladite au moins une entité cliente avec insertion du deuxième contenu (Pj).

8. Procédé de distribution selon la revendication 7, comprenant une étape (F1) de détermination d'un scénario d'insertion dans le premier contenu (Ci), ledit scénario d'insertion étant mis à jour sur réception de comptes-rendus d'insertion de deuxièmes contenus (Pj) dans le premier contenu (Ci) vers des entités clientes.

9. Dispositif (3, S2, S3, S4) de sélection, agencé pour préparer une distribution d'un premier contenu (Ci), au cours de laquelle une insertion d'au moins un deuxième contenu (Pj) est prévue à destination d'au moins une entité cliente parmi des entités clientes candidates dans un réseau de communication (1), comprenant :
- des moyens (31) d'obtention d'un scénario d'insertion dans le premier contenu (Ci), ledit scénario d'insertion comprenant pour au moins une information temporelle relative au premier contenu, une proposition de deuxièmes contenus (Pj) susceptibles d'être insérés dans le premier contenu ;
- des moyens (32) de sélection d'au moins une entité cliente, agencés pour sélectionner au moins une entité cliente parmi lesdites entités clientes candidates, adaptée à recevoir au moins un deuxième contenu (Pj) parmi les deuxièmes contenus proposés pour ladite au moins une information temporelle, en fonction de métadonnées relatives aux sous-réseaux SN1, SN2, SN3, dans lesquels se trouvent les entités clientes candidates.

10. Système (S2, S3, S4) agencé pour préparer une distribution d'un premier contenu (Ci), au cours de laquelle une insertion d'au moins un deuxième contenu (Pj) est prévue à destination d'au moins une entité cliente parmi des entités clientes candidates dans un réseau de communication (1), comprenant :
- des moyens (31) de détermination d'un scénario d'insertion dans le premier contenu (Ci), ledit scénario d'insertion comprenant pour au moins une information temporelle relative au premier contenu (Ci), une proposition de deuxièmes contenus (Pj) susceptibles d'être insérés dans le premier contenu ;
- des moyens (32) de sélection d'au moins une entité cliente, agencés pour sélectionner au moins une entité cliente parmi lesdites entités clientes candidates, adaptée à recevoir au moins un deuxième contenu (Pj) parmi les deuxièmes contenus proposés pour ladite au moins une information temporelle, en fonction de métadonnées relatives aux sous-réseaux SN1, SN2, SN3, dans lesquels se trouvent les entités clientes candidates.

11. Système de distribution de contenus d'un premier contenu à destination d'entités clientes d'un réseau de communication, comprenant :
- un système (S2, S3, S4) selon la revendication 10, agencé pour préparer une distribution d'un premier contenu (Ci), au cours de laquelle une insertion d'au moins un deuxième contenu (Pj) est prévue à destination d'au moins une entité cliente parmi des entités clientes candidates dans un réseau de communication (1) ;
- des moyens de distribution du premier contenu (Ci) à destination de ladite au moins une entité cliente avec insertion du deuxième contenu (Pj).

12. Programme d'ordinateur comportant des instructions pour la mise en oeuvre du procédé de préparation selon la revendication 1, mises en oeuvre par un dispositif de sélection 3, S2, S3, S4, lorsque ce programme est exécuté par un processeur.

## Patentansprüche

1. Verfahren zur Vorbereitung einer Verteilung eines ersten Inhalts (Ci), während der eine Einfügung mindestens eines zweiten Inhalts (Pj) vorgesehen ist, an mindestens eine Client-Entität unter Kandidat-Client-Entitäten in einem Kommunikationsnetz (1),
wobei das Verfahren zur Vorbereitung die folgenden Schritte enthält, die von einer Auswahlvorrichtung (3, S2, S3, S4) durchgeführt werden:
- einen Schritt des Erhalts eines Einfügungsszenarios in den ersten Inhalt (Ci), wobei das Einfügungsszenario einen Vorschlag zweiter Inhalte (Pj) enthält, die in den ersten Inhalt (Ci) eingefügt werden können;
**dadurch gekennzeichnet, dass** die zweiten Inhalte (Pj) für mindestens eine zeitliche Information bezüglich des ersten Inhalts (Ci) vorgeschlagen werden, und dass das Verfahren außerdem enthält:
- einen Schritt (G3) der Auswahl mindestens einer Client-Entität unter den Kandidat-Client-Entitäten, die mindestens einen zweiten Inhalt (Pj) unter den für die mindestens eine zeitliche Information vorgeschlagenen zweiten Inhalten (Pj) empfangen kann, abhängig von Metadaten bezüglich der Teilnetze (SN1, SN2, SN3), in denen sich die Kandidat-Client-Entitäten befinden.

2. Verfahren zur Vorbereitung der Verteilung nach Anspruch 1, das außerdem einen Schritt (G3) der Festlegung der Metadaten bezüglich der Teilnetze (SN1, SN2, SN3) ausgehend von mindestens gesammelten Informationen (G2) bezüglich der Teilnetze (SN1, SN2, SN3) enthält.

3. Verfahren zur Vorbereitung der Verteilung nach Anspruch 2, wobei die bezüglich der Teilnetze (SN1, SN2, SN3) gesammelten Informationen zu der Gruppe gehören, die Konfigurationsdaten, Betriebsdaten, von Anwendungen gelieferte Qualitätsdaten enthält.

4. Verfahren zur Vorbereitung der Verteilung nach Anspruch 1, wobei die Auswahl (G31) ebenfalls abhängig von Metadaten ausgeführt wird, die dem ersten Inhalt (Ci) bzw. den zweiten Inhalten (Pj) zugeordnet sind, die für die mindestens eine zeitliche Information vorgeschlagen werden.

5. Verfahren zur Vorbereitung der Verteilung nach Anspruch 1, wobei der Auswahlschritt einen Teilschritt (G32) der Auswahl von Zugangsknoten für eine Client-Entität enthält.

6. Verfahren zur Vorbereitung der Verteilung nach Anspruch 1, wobei der Auswahlschritt einen Teilschritt (G35) der Auswahl des zweiten Inhalts (Pj) abhängig von einer Erfahrungsqualität für die Client-Entität enthält.

7. Verfahren zur Verteilung eines ersten Inhalts (Ci) an Client-Entitäten eines Kommunikationsnetzes, wobei das Verfahren die folgenden Schritte enthält:
- eine Vorbereitung der Verteilung des ersten Inhalts (Ci), während der eine Einfügung mindestens eines zweiten Inhalts (Pj) für mindestens eine Client-Entität unter Kandidat-Client-Entitäten nach Anspruch 1 vorgesehen ist;
- einen Schritt (H1) der Verteilung des ersten Inhalts an die mindestens eine Client-Entität mit Einfügung des zweiten Inhalts (Pj).

8. Verteilungsverfahren nach Anspruch 7, das einen Schritt (F1) der Festlegung eines Einfügungsszenarios in den ersten Inhalt (Ci) enthält, wobei das Einfügungsszenario bei Empfang von Einfügungsprotokollen zweiter Inhalte (Pj) in den ersten Inhalt (Ci) an Client-Entitäten aktualisiert wird.

9. Auswahlvorrichtung (3, S2, S3, S4), die eingerichtet ist, um eine Verteilung eines ersten Inhalts (Ci), während der eine Einfügung mindestens eines zweiten Inhalts (Pj) vorgesehen ist, an mindestens eine Client-Entität unter Kandidat-Client-Entitäten in einem Kommunikationsnetz (1) vorzubereiten, die enthält:
- Einrichtungen (31) zum Erhalt eines Einfügungsszenarios in den ersten Inhalt (Ci), wobei das Einfügungsszenario für mindestens eine zeitliche Information bezüglich des ersten Inhalts einen Vorschlag zweiter Inhalte (Pj) enthält, die in den ersten Inhalt eingefügt werden können;
- Einrichtungen (32) zur Auswahl mindestens einer Client-Entität, die eingerichtet sind, um mindestens eine Client-Entität unter den Kandidat-Client-Entitäten auszuwählen, die geeignet ist, um mindestens einen zweiten Inhalt (Pj) unter den für die mindestens eine zeitliche Information vorgeschlagenen zweiten Inhalten abhängig von Metadaten bezüglich der Teilnetze (SN1, SN2, SN3) zu empfangen, in denen sich die Kandidat-Client-Entitäten befinden.

10. System (S2, S3, S4), das eingerichtet ist, um eine Verteilung eines ersten Inhalts (Ci) vorzubereiten, während der eine Einfügung mindestens eines zweiten Inhalts (Pj) für mindestens eine Client-Entität unter Kandidat-Client-Entitäten in einem Kommunikationsnetz (1) vorgesehen ist, das enthält:
- Einrichtungen (31) zur Bestimmung eines Einfügungsszenarios in den ersten Inhalt (Ci), wobei das Einfügungsszenario für mindestens eine zeitliche Information bezüglich des ersten Inhalts (Ci) einen Vorschlag zweiter Inhalte (Pj) enthält, die in den ersten Inhalt eingefügt werden können;
- Einrichtungen (32) zur Auswahl mindestens einer Client-Entität, die eingerichtet sind, um mindestens eine Client-Entität unter den Kandidat-Client-Entitäten auszuwählen, die geeignet ist, um mindestens einen zweiten Inhalt (Pj) unter den für die mindestens eine zeitliche Information vorgeschlagenen zweiten Inhalten abhängig von Metadaten bezüglich der Teilnetze (SN1, SN2, SN3) zu empfangen, in denen sich die Kandidat-Client-Entitäten befinden.

11. System zur Verteilung von Inhalten eines ersten Inhalts an Client-Entitäten eines Kommunikationsnetzes, das enthält:
- ein System (S2, S3, S4) nach Anspruch 10, das eingerichtet ist, um eine Verteilung eines ersten Inhalts (Ci) vorzubereiten, während der eine Einfügung mindestens eines zweiten Inhalts (Pj) für mindestens eine Client-Entität unter Kandidat-Client-Entitäten in einem Kommunikationsnetz (1) vorgesehen ist;
- Einrichtungen zur Verteilung des ersten Inhalts (Ci) an die mindestens eine Client-Entität mit Einfügung des zweiten Inhalts (Pj).

12. Computerprogramm, das Anweisungen zur Durchführung des Verfahrens zur Vorbereitung nach Anspruch 1 aufweist, die von einer Auswahlvorrichtung (3, S2, S3, S4) durchgeführt werden, wenn dieses Programm von einem Prozessor ausgeführt wird.

## Claims

1. Method of preparing a distribution of a first content (Ci), in the course of which an insertion of at least one second content (Pj) is envisaged destined for at least one client entity from among candidate client entities in a communication network (1),
said method of preparing comprising the following steps implemented by a selection device (3, S2, S3, S4):
- a step of obtaining a scenario of insertion in the first content (Ci), said scenario of insertion comprising a proposal of second contents (Pj) that are liable to be inserted into the first content (Ci);
**characterized in that** the second contents (Pj) are proposed for at least one temporal item of information relating to the first content (Ci) and **in that** the method further comprises:
- a step (G3) of selecting at least one client entity from among said candidate client entities, which is suitable for receiving at least one second content (Pj) from among the second contents (Pj) proposed for said at least one temporal item of information, as a function of metadata relating to the sub-networks (SN1, SN2, SN3), in which the candidate client entities are situated.

2. Method of preparing distribution according to Claim 1, furthermore comprising a step (G3) of determining the metadata relating to the sub-networks (SN1, SN2, SN3) on the basis of at least information collected (G2) relating to the sub-networks (SN1, SN2, SN3).

3. Method of preparing distribution according to Claim 2, in which the information collected relating to the sub-networks (SN1, SN2, SN3) belongs to the group comprising configuration data, utilization data, quality data provided by applications.

4. Method of preparing distribution according to Claim 1, in which the selection (G31) is also performed as a function of metadata respectively associated with the first content (Ci) and with the second contents (Pj) proposed for said at least one temporal item of information.

5. Method of preparing distribution according to Claim 1, in which the selecting step comprises a substep (G32) of selecting access nodes for a client entity.

6. Method of preparing distribution according to Claim 1, in which the selecting step comprises a substep (G35) of selecting the second content (Pj) as a function of a quality of experience for the client entity.

7. Method of distributing a first content (Ci) destined for client entities of a communication network, said method comprising the following steps:
- a preparing of the distribution of the first content (Ci), in the course of which an insertion of at least one second content (Pj) is envisaged destined for at least one client entity from among candidate client entities, according to Claim 1;
- a step (H1) of distributing the first content destined for said at least one client entity with insertion of the second content (Pj).

8. Method of distributing according to Claim 7, comprising a step (F1) of determining a scenario of insertion in the first content (Ci), said scenario of insertion being updated on receipt of reports of insertion of second contents (Pj) into the first content (Ci) to client entities.

9. Selection device (3, S2, S3, S4), designed to prepare a distribution of a first content (Ci), in the course of which an insertion of at least one second content (Pj) is envisaged destined for at least one client entity from among candidate client entities in a communication network (1), comprising:
- means (31) for obtaining a scenario of insertion in the first content (Ci), said scenario of insertion comprising for at least one temporal item of information relating to the first content, a proposal of second contents (Pj) that are liable to be inserted into the first content;
- means (32) for selecting at least one client entity, which are designed to select at least one client entity from among said candidate client entities which is suitable for receiving at least one second content (Pj) from among the second contents proposed for said at least one temporal item of information, as a function of metadata relating to the sub-networks (SN1, SN2, SN3), in which the candidate client entities are situated.

10. System (S2, S3, S4) designed to prepare a distribution of a first content (Ci), in the course of which an insertion of at least one second content (Pj) is envisaged destined for at least one client entity from among candidate client entities in a communication network (1),
comprising:
- means (31) for determining a scenario of insertion in the first content (Ci), said scenario of insertion comprising for at least one temporal item of information relating to the first content (Ci), a proposal of second contents (Pj) that are liable to be inserted into the first content;
- means (32) for selecting at least one client entity, which are designed to select at least one client entity from among said candidate client entities which is suitable for receiving at least one second content (Pj) from among the second contents proposed for said at least one temporal item of information, as a function of metadata relating to the sub-networks (SN1, SN2, SN3), in which the candidate client entities are situated.

11. System for distributing contents of a first content destined for client entities of a communication network, comprising:
- a system (S2, S3, S4) according to Claim 10, designed to prepare a distribution of a first content (Ci), in the course of which an insertion of at least one second content (Pj) is envisaged destined for at least one client entity from among candidate client entities in a communication network (1);
- means for distributing the first content (Ci) destined for said at least one client entity with insertion of the second content (Pj).

12. Computer program comprising instructions for the implementation of the method of preparing according to Claim 1, implemented by a selection device (3, S2, S3, S4), when this program is executed by a processor.
